# EUROPÄISCHE PATENTSCHRIFT

(11) **EP 1 638 752 B1**
(45) Veröffentlichungstag und Bekanntmachung des Hinweises auf die Patenterteilung: **14.11.2012**
(21) Anmeldenummer: 04738053.0
(22) Anmeldetag: 30.06.2004
(51) Int. Cl.: G02C 5/00

(54) **KUNSTSTOFF-SPRITZGUSSTEIL MIT STEIFER UND GELENKIGER ZONE UND VERWENDUNGEN DESSELBEN**
PLASTIC INJECTION-MOULDED PART COMPRISING A RIGID REGION AND AN ARTICULATED REGION, AND USES OF THE SAME
ELEMENT PLASTIQUE MOULE PAR INJECTION COMPORTANT UNE ZONE RIGIDE ET UNE ZONE ARTICULEE ET UTILISATION DE CET ELEMENT

(30) Priorität: 01.07.2003 CH 116503
(43) Veröffentlichungstag der Anmeldung: 29.03.2006
(73) Patentinhaber: EMS-CHEMIE AG, 7013 Domat-Ems (CH)
(72) Erfinder: JELTSCH, Thomas, CH-7013 Domat/Ems (CH); KRUSE, Christian, CH-9477 Trübbach (CH)
(74) Vertreter: Rentsch Partner AG
(86) Internationale Anmeldenummer: PCT/CH2004/000412
(87) Internationale Veröffentlichungsnummer: WO 2005/002826

(56) Entgegenhaltungen:
- WO-A-00/64306
- FR-A- 2 612 652
- PATENT ABSTRACTS OF JAPAN Bd. 0182, Nr. 89 (M-1614), 2. Juni 1994 (1994-06-02) & JP 6 055575 A (INOAC CORP), 1. März 1994 (1994-03-01)
- HAGEN R: "VERBUNDSPRITZGIESSEN VON POLYAMIDWERKSTOFFEN - NEUE KONSTRUKTIONSMOGLICHKEITEN FUR BRILLENGESTELLE" KUNSTSTOFFE, CARL HANSER VERLAG. MUNCHEN, DE, Bd. 79, Nr. 1, 1989, Seiten 72-76, XP000071878 ISSN: 0023-5563

## Beschreibung

### TECHNISCHES GEBIET

Die vorliegende Erfindung betrifft ein Kunststoff-Spritzgussteil und Verwendungen desselben mit mindestens einer steifen Zone sowie mindestens einer flexiblen, rückfedernden Gelenkzone, die eine Biege- und/oder Torsionsgelenkzone sein kann. Als Beispiel kann ein zangenartiges Werkzeug mit zwei steifen Hebeln und einem diese verbindenden flexiblen Abschnitt angegeben werden, wobei die Hebel jeweils steife Zonen und der flexible Abschnitt eine auf Biegung belastbare Gelenkzone bilden.

Unter dem Begriff steife Zone soll entsprechend im Rahmen dieser Erfindung ein bestimmter abgrenzbarer Bereich des Spritzgussteils verstanden werden, für den seine Gestalt vor allem wesentlich ist. Diese Gestalt soll beim bestimmungsgemässen Gebrauch des Spritzgussteils sowie einer dabei zu erwartenden Krafteinwirkung auf das Spritzgussteil im wesentlichen auch erhalten bleiben, was eine gewisse Steifigkeit dieser Zone voraussetzt. Formänderungen des Spritzgussteils soll demgegenüber bestimmungsgemäss die Gelenkzone zulassen. Auch diese soll im Rahmen dieser Erfindung einem bestimmten, abgrenzbaren Bereich des Spritzgussteils zugeordnet werden können und soll im Hinblick auf den bestimmungsgemässen Gebrauch des Spritzgussteils und seine konzipierte Lebensdauer eine genügend hohe Anzahl der dafür notwendigen Bewegungen zulassen.

### STAND DER TECHNIK

Eine als einstückiges Kunststoff-Spritzgussteil hergestellte Greifzange der vorgenannten Art zum Entfernen von Halogenlampen ist aus der DE 40 01 135 A1 bekannt. Die FR 2 815 238 A1 zeigt ebenfalls eine Greifzange mit zwei Greifarmen und einem flexiblen Biegegelenkabschnitt als Küchengerät, welche mit aufsteckbaren Endstücken komplettierbar ist. Grundsätzlich ähnlich ausgebildet ist ein in der US 4,092,776 A1 beschriebenes Schneidwerkzeug, welches zusätzlich mit Metallklingen an den freien Enden zweier Schneidarme versehen ist. Bei allen diesen Ausführungsformen besteht das Spritzgussteil aus einem einzigen Kunststoff-Material mit einheitlichen Materiafeigenschaften. Die notwendige relative Steifigkeit der Greif- bzw. Schneidarme gegenüber der notwendigen relativen Flexibilität der diese verbindenden Biegegelenkzone ist ausschliesslich durch eine geeignete Formgebung des Querschnitts der einzelnen Zonen sichergestellt.

Es sind auch schon Spritzgussverfahren bekannt, bei welchen ein Spritzgussteil aus mehreren verschiedenen Kunststoffkomponenten hergestellt werden kann.

In diesem Zusammenhang zunächst zu nennen sind zweistufige Verfahren, bei welchen ein in einem ersten Schritt aus einem ersten Kunststoffmaterial gespritztes Teil in einem zweiten Schritt in eine zweite Formkavität eingelegt und mit einem zweiten Kunststoffmaterial angespritzt oder umspritzt wird. Die Herstellung kann auch in derselben Formkavität geschehen, falls diese über Schieber erweitert werden kann. Die Verbindung der beiden Komponenten ist hierbei meist nicht sehr belastbar. Als Beispiel für ein derart hergestelltes Spritzgussteil kann eine Zahnbürste genannt werden, deren Griff mit einem weichen, gut in der Hand liegenden Material teilweise umspritzt ist.

Desweiteren bekannt sind Mehrkomponenten-Spritzgussprozesse, bei welchen mindestens zwei Kunststoffkomponenten räumlich oder zeitlich versetzt in einem einzigen Prozess in die gleiche Spritzgussform (Kavität) gespritzt werden, wie dies beispielsweise in der DE 197 22 551 A1 und JP 6055575 beschrieben wird.

Werden die Kunststoffkomponenten gleichzeitig von verschiedenen Anspritzpunkten aus in die gleiche Formkavität gespritzt, spricht man von Bi-Injektion. Hierbei entsteht eine Bindenaht dort, wo die beiden schmelzeförmigen Komponenten in der Kavität aufeinandertreffen. Die Bindenaht verursacht regelmässig eine gewisse Schwächung des Spritzgussteils, was dem Fachmann zum Beispiel aus F. Johannaber, W. Michaeli: Handbuch Spritzglessen, Carl Hanser Verlag, München 2002, Seite 367 Mitte, bekannt ist. Bei der Gestaltung der Spitzgussform wird man daher regelmässig versuchen, die Bindenaht in einem nicht belasteten Bereich des Spritzgussteils zu platzieren.

Werden die Kunststoffkomponenten (Schmelzen) zeitlich nacheinander vom gleichen Anspritzpunkt aus in die gleiche Form gespritzt, spricht man von Co-Injektion. Hierbei kommt aus strömungs- sowie abkühlungstechnischen Gründen die zuerst eingespritzte Kunststoffkomponente an der Wandung der Spritzform und damit an der Oberfläche des Spritzgussteils zu liegen. Entsprechend entstehen bei diesem Verfahren typisch Teile mit Kern und Aussenschicht.

### DARSTELLUNG DER ERFINDUNG

Im Hinblick auf den vorstehend erläuterten Stand der Technik stellt sich die Erfindung die Aufgabe, ein Kunststoff-Spritzgussteil der eingangs genannten Art anzugeben, welches aufgrund seiner herstellungsbedingten Ausbildung und seines Materials zusätzliche Gebrauchsvorteile aufweist.

Diese Aufgabe wird bei einem Kunststoff-Spritzgussteil mit mindestens einer steifen Zone sowie mindestens einer flexiblen, rückfedernden Gelenkzone durch die im Patentanspruch 1 angegebenen Merkmale gelöst.

Im einfachsten Fall bleibt die Kavität bei der Herstellung des Kunststoff-Spritzgussteils unverändert. Im Rahmen der Erfindung ist es aber auch möglich, erweiterbare Kavitäten mit Schiebern zu verwenden, z.B. zur Anwendung des Gasinnendruckverfahrens mit einer Nebenkavität.

Unter den Begriffen "co-injiziert", "Co-Injektion" oder "Co-Injektionsverfahren" soll im Rahmen dieser Erfindung nicht nur die bekannte Co-Injektion im engeren Sinne verstanden werden, wie sie zum Beispiel erwähnt ist in F. Johannaber, W. Michaeli: Handbuch Spritzgiessen, Carl Hanser Verlag, München 2002, Seite 490 Bild 6.64, sowie Seite 505 oben, sondern unter Co-Injektion sollen hier auch alle gleichartigen bzw. gleichwertigen Verfahren verstanden werden, bei denen zwei oder mehr Kunststoffkomponenten nacheinander durch eine Düse bzw. einen Anspritzpunkt injiziert werden. Erwähnt werden soll in diesem Zusammenhang das Monosandwichverfahren, wie es z.B. in DE 39 32 416 A1 beschrieben ist.

Durch die Erfindung wird das oben beschriebene Co-Injektionsverfahren zur Herstellung von Teilen mit steifer und gelenkiger Zone demnach in neuer Weise eingesetzt. Von lediglich einer der eingesetzten Kunststoffkomponenten wird mengenmässig so viel eingespritzt, dass diese den Bereich der Gelenkzone des herzustellenden Teils in der Spritzgussform überhaupt erreichen und ausfüllen kann. Die mindestens eine weitere Kunststoffkomponente wird demgegenüber mengenmässig so bemessen, dass sie im Bereich der steifen Zone verbleibt, bei welcher der Anspritzpunkt angeordnet ist. Es entsteht dadurch lediglich im Bereich der steifen Zone eine Kern-Schalenstruktur, während die Gelenkzone durch lediglich eine Kunststoffkomponente gebildet wird, die über die steife Zone hinausgeströmt ist. Es versteht sich, dass bei geeigneter Wahl der Materialen hierdurch eine verbesserte Flexibilität in der Gelenkzone sowie eine höhere Steifigkeit im der steifen Zone erzielbar ist.

Das Vordringen bzw. nicht Vordringen der einzelnen Kunststoffkomponenten bis in den Bereich der Gelenkzone und die Ausbildung einer gleichmässig konzentrischen Kern-Schalenstruktur kann auch durch Wahl oder Einstellung der Viskositäten der verschiedenen Kunststoffkomponenten im aufgeschmolzen Zustand beeinflusst und gesteuert werden. Mit Vorteil wird für die Kunststoffkomponente zur Bildung der Aussenschicht eine solche mit geringerer Schmelzviskosität gewählt im Vergleich zur Komponente, die den Kern bildet.

Gemäss einer bevorzugten Ausführungsform wird die die Gelenkzone bildende Kunststoffkomponente als erste eingespritzt und erst nachfolgend die mindestens eine weitere Komponente. Die die Gelenkzone bildende Kunststoffkomponente bildet dann eine Aussenschicht in der steifen Zone, wohingegen die übrigen Kunststoffkomponenten einen versteifenden Kern bilden. Da in diesem Falle die gesamte Oberfläche des Spritzgussteils durch das für die Gelenkzone verwendete Material bestimmt wird, können mit Vorteil die übrigen Komponenten ohne Berücksichtigung ihrer Oberflächeneigenschaften ausgewählt verwendet. Dies ermöglicht bevorzugt den Einsatz faserverstärkter oder mineralverstärkter Kunststoffe.

Bei dieser Ausführungsform ergibt sich verfahrensbedingt, dass sich im fertigen Teil der versteifende Kern in der steifen Zone zur Gelenkzone hin auslaufend verjüngt. Dies ermöglicht es, einen belastungsgünstigen kontinuierlichen Übergang hinsichtlich der Biegesteifigkeit und Spannungen zwischen der steifen Zone und der Gelenkzone zu realisieren. Kritische Spannungspitzen werden so vermindert.

In einer alternativen Ausführungsform wird die die Gelenkzone bildende Kunststoffkomponente erst nach mindestens einer anderen Kunststoffkomponente gespritzt, so dass sie im Innern der steifen Zone zu liegen kommt und z.B. einen weicheren Kern der steifen Zone bildet. Die zuerst gespritzte Kunststoffkomponente bildet hierbei eine steifere Aussenschicht der steifen Zone. Um diese Ausbildung zu realisieren, muss die nachfolgend gespritzte Kunststoffkomponente, um in die Gelenkzone vordringen zu können, die zuvor gespritzte Kunststoffkomponente durchbrechen.

In einer weiteren Ausführungsform der Erfindung kann die steife Zone als Hebel ausgebildet sein, an welchem bei dem bestimmungsgemässen Gebrauch des Spritzgussteils Kräfte ohne eine funktionsbeeinträchtigende Verformung der steifen Zone angreifen können.

Für die die Gelenkzone bildende Kunststoffkomponente geeignet sind thermoplastische Elastomere, Polyamide, Polyetheramide, Polyesteramide, Polycarbonat, Polyurethan sowie lonomere. Polyamide stehen hierbei als Oberbegriff für Homopolyamide, Copolyamide sowie Mischungen aus Homo- und/oder Copolyamiden.

Bevorzugte Polyamide sind Polyamid 11, Polyamid 12, Polyamid 6, Polyamid 66, teilaromatische Polyamide sowie Polyamide mit cycloaliphatischen Monomerbausteinen wie Polyamid PACM 12 und Polyamid MACM 12 sowie Legierungen dieser Kunststoffe untereinander. Zur Nomenklatur wird verwiesen auf S. Schaaf: Polyamide, Werkstoffe für die High-Technologie und das moderne Leben, Verlag moderne Industrie, Landsberg 1997.

Besonders bevorzugt ist das Polyamid MACM 12, ein transparentes Polyamid, das bei der EMS-CHEMIE AG, CH-7013 Domat/Ems, unter dem Namen Grilamid® TR 90 erhältlich ist.

Als Kunststoffkomponenten für die steife Zone kommen Polybutylenterephthalat oder generell ebenfalls wieder Polyamide in Frage. Bevorzugt sind diese faser- oder mineralverstärkt. Besonders bevorzugt ist hierbei das Material Grivory® GV, eine glasfaserverstärkte Mischung aus Polyamid 66 und Polyamid 61/6T, erhältlich bei der EMS-CHEMIE AG, CH-7013 Domat/Ems.

Alle genannten Polyamide können selbstverständlich die üblichen Hilfsstoffe, Füllstoffe und Additive enthalten, z.B. Farbstoffe, Stabilisatoren, Schlagzähmodifikatoren, Haftungsmodifikatoren, Weichmacher, Pigmente, etc.

Unter den eingangs zum Stand der Technik erwähnten Teilen sind solche, wie z.B. die Greifzangen, bei welchen beidseits einer Gelenkzone jeweils eine steife Zone vorhanden ist und wobei die beiden steife Zonen durch die Gelenkzone beweglich miteinander verbundenen sind.

Derartige Spritzgussteile lassen sich nach der Erfindung nach Art des oben definierten Bi-Injektionsprozesses herstellen durch gleichzeitiges Anspritzen von jeweils mindestens einem Anspritzpunkt im Bereich beider steifen Zonen aus. An mindestens einem der Anspritzpunkte muss dabei jedoch eine Co-Injektion ausgeführt werden. Bevorzugt werden hierbei jedoch an jedem der Anspritzpunkte verschiedene Kunststoffkomponenten co-injiziert, so dass z.B. bei einer Greifzange beide Greifarme mit einem verstärkenden Kern versehen sind.

Durch das gleichzeitige Anspritzen von mehreren Anspritzpunkten aus ergibt sich, wie bereits erläutert, zwangsläufig eine Bindenaht. Es hat sich in überraschender Weise jedoch gezeigt, dass bei geeigneter Wahl des Materials, wie insbesondere des bereits genannten Polyamids MACM 12, für die Gelenkzone die Bindenaht ohne weiteres ohne nennenswerte Schwächung dieser Zone mitten in diese hinein gelegt werden kann, was bei der Herstellung symmetrischer Teile von erheblichem Vorteil ist.

Im Rahmen der Erfindung bevorzugt ist, dass die die Gelenkzone bildende Kunststoffkomponente biegeweicher als mindestens eine der übrigen Kunststoffkomponenten ist und vorzugsweise einen Zug-E-Modul kleiner als 4000 MPa, vorzugsweise kleiner als 2500 MPa und inbesondere von etwa 1600 MPa aufweist. Für das Material Polyamid MACM 12 trifft letzteres zu. Mindestens eine der übrigen Kunststoffkomponenten sollte demgegenüber einen Zug-E-Modul grösser als 4000 MPa, vorzugsweise grösser als 8000 MPa aufweisen und/oder faserverstärkt und/oder mineralverstärkt sein. Für die als Beispiele genannten Kunststoffkomponenten für die steife Zone trifft das ebenfalls zu. In jedem Fall hat das Material für die steife Zone einen höheren Zug-E-Modul als das Material für die flexible Zone.

Wie eingangs bereits erwähnt, sollte die die Gelenkzone bildende Kunststoffkomponente im Hinblick auf den Gebrauchszweck des Spritzgussteils eine ausreichende Wechselbiegefestigkeit aufweisen. Das bereits erwähnte Material Polyamid MACM 12 weist unter allen Polyamiden eine ausserordentliche Wechselbiegefestigkeit auf.

Gegenstand der Erfindung sind auch noch die in den Ansprüchen 17 und 18 angegebenen Verwendungen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen:
- Fig. 1: in zwei Ansichten ein Spritzgussteil nach der Erfindung in Form eines Hebels mit einseitig angeschlossenem Biegegelenk, das beispielsweise als Türgriff oder Fahrrad-Bremshebel verwendbar ist, und zwar unter a) in geschnittener Darstellung noch in der Spritzgussform und unter b) allein in einer Seitenansicht;
- Fig. 2: in zwei Ansichten eine weitere Ausführungsform eines Spritzgussteils nach der Erfindung, das als Türgriff mit integrierter Griffschale ausgebildet und insbesondere für Autotüren, aber auch für Zimmer- oder Haustüren verwendbar ist;
- Fig. 3: unter a) in perspektivischer Darstellung ein Spritzgussteil nach der Erfindung in Form einer einseitig mit einem Biegegelenk versehenen Klappe und unter b) eingebaut als Dichtungsklappe in einem Rohrsystem;
- Fig. 4: unter a) und b) in perspektivischer Ansicht jeweils eine Brille, deren Gestell ein Spritzgussteil nach der Erfindung bildet und bei welchem die beiden Brillenbügel mit angespritzt und über erfindungsgemässe Biegegelenkzonen jeweils mit dem vorderen formstabilen Gestellteil beweglich verbunden sind, mit Variante a) nur vorderes Gestellteil verstärkt, Variante b) auch die Bügel von den Enden her verstärkt;
- Fig. 5: Spritzgussteile nach der Erfindung jeweils in Form eines Doppelhebels mit zwei steifen Zonen, die über eine flexible, rückfedernde Gelenkzone miteinander verbunden sind, wobei die Teilfiguren darstellen:
5a) ein zangenartiges Werkzeug 50a, das zwei formstabile Betätigungsgriffe aufweist und im Prinzip sowohl eine Zange als auch eine Pinzette sein kann,
5b) die Aussenkontur eines erfindungsgemässen Nussknackers 50b,
5c) einen ausgestreckten Doppelhebel 50c mit einem Biege- und/oder Torsionsgelenk;
- Fig. 6: ein Spritzgussteil nach der Erfindung in Form einer Zahnbürste mit einem formstabilem Kopf, einem formstabilem Griff und einer diese beiden Teile verbindenden, flexiblen Halszone;
- Fig. 7: in geschnittener Darstellung ein Spritzgussteil mit steifer und gelenkiger Zone noch in der Spritzgussform, bei welchem die die Gelenkzone bildende Kunststoffkomponente in der steifen Zone innenliegend angeordnet ist und eine weitere Kunststoffkomponente eine harte Aussenschicht der steifen Zone bildet; und
- Fig. 8: in geschnittener Darstellung ein Spritzgussteil mit steifer und gelenkiger Zone noch in der Spritzgussform, bei welchem die steife Zone durch drei Kunststoffkomponenten gebildet wird.

### WEGE ZUR AUSFÜHRUNG DER ERFINDUNG

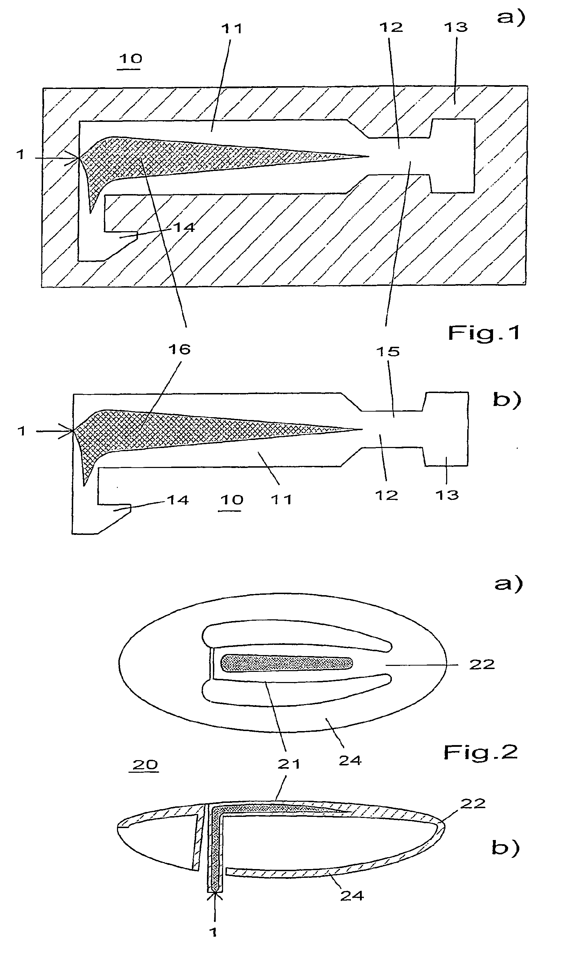

Bei dem Spritzgussteil von Fig. 1 handelt es sich z.B. um einen Türgriff 10 mit einem Handgriff 11 als steife Zone, an dessen einem Ende eine Biegegelenkzone 12 mit weiter daran angeschlossenem Verankerungsteil 13 vorhanden ist. Mit dem Verankerungsteil 13 kann der Türgriff 10 mit einer Tür (nicht dargestellt) fest verbunden werden. Wegen der Biegegelenkzone 12 kann der als eine Art Hebelarm dienende Handgriff 11 danach gegenüber der Verankerungszone 13 und damit der Tür bewegt und dabei mit einem an seinem anderen Ende angeformten Haken 14 z.B. die Verriegelung eines Türschlosses (nicht dargestellt) gelöst werden. Im Falle eines Fahrrad-Bremshebels würde der Haken 14 natürlich entfallen. Andererseits könnte aber in diesem Fall das Verankerungsteil 13 des Bremshebels direkt als Griff für den Fahrradlenker ausgebildet sein, in einer weiteren Variante sogar mit angespritztem Horn (Hornlenker).

Der Türgriff 10 ist durch Co-Injektion zweier unterschiedlicher Kunststoffkomponenten 15 und 16 von dem durch einen Pfeil gekennzeichneten Anspritzpunkt 1 aus hergestellt, wobei die in Fig. 1 hell dargestellte Kunststoffkomponente 15 als erste und die in in Fig. 1 dunkel dargestellte Kunststoffkomponente 16 als zweite in die Form eingespritzt wurde. Die beiden Kunststoffkomponenten kamen hierbei ineinander zu liegen mit der zuerst eingespritzten Kunststoffkomponente 15 aussen und der nachfolgend eingespritzten Kunststoffkomponente 16 innen. Für das Verständnis von Fig. 1 b) kann beispielsweise angenommen werden, dass die äussere Kunststoffkomponente 15 transparent und die innere Kunststoffkomponente 16 intransparent oder zumindest anders als die äussere 15 eingefärbt ist, so dass die innere Kunststoffkomponente 16 in der äusseren 15 erkennbar ist. In der Praxis muss das natürlich nicht der Fall sein. Wenn aber für die äussere Kunststoffkomponente 15 ein transparenter Kunststoff wie zum Beispiel das bevorzugte Polyamid MACM 12 verwendet wird, lassen sich unter anderem dekorative Spezialeffekte mit dreidimensionaler Tiefenwirkung erzielen, wenn Effekt-Pigmente wie z.B. Perlmutt-Glanzpigmente oder Metallic-Pigmente eingesetzt werden. Solche Pigmente werden am einfachsten als Flüssigdispersionsfarben direkt zur Kunststoffkomponente in den Einzug des Spritzgussextruders dosiert. Entsprechendes gilt auch für die nachstehend noch erläuterten Beispiele, wo dann auf diesen Umstand nicht erneut hinwiesen wird.

Nach dem Vorstehenden bedeckt die Kunststoffkomponente 15, vom Anspritzpunkt abgesehen, die gesamte Oberfläche des Türgriffs 10 (bzw. des Fahrrad-Bremshebels oder sonst eines Hebels). Die Einspritzbedingungen sowie das Mengenverhältnis und die Viskositäten der beiden Kunststoffkomponenten wurden beim Einspritzen aber auch so gewählt, dass lediglich die zunächst eingespritzte Kunststoffkomponente 15 in der Spritzgussform über den Bereich des Handgriffs 11 hinaus bis in den Bereich der Biegegelenkzone 12 und den Bereich des Verankerungsteils 13 vordringen konnte. Demgegebenüber konnte die nachfolgend gespritzte Kunststoffkomponente 16 nicht über den Bereich des Handgriffs hinaus vordringen und läuft in Richtung auf die Biegegelenkzone 12 hin unter Verjüngung ihres Querschnitts auch noch aus. Allein der Handgriff 11 wird damit durch beide Kunststoffkomponenten gebildet.

Im Hinblick auf die Herstellung und den Gebrauchszweck des Türgriffs 10 von Fig. 1 ist es bevorzugt, für die Kunststoffkomponente 15 eine solche zu wählen, die sich beim Spritzen im aufgeschmolzenen Zustand durch eine geringere Viskosität als Komponente 16 auszeichnet, die im Hinblick auf die Biegegelenkzone 12 über eine ausreichend hohe Wechselbiegefestigkeit verfügt und die, als Oberflächenschicht des Türgriffs 10, eine glatte, angenehm anzufassende Oberfläche ergibt. Das bereits erwähnte Produkt Polyamid MACM 12 ist besonders gut geeignet. Für die Kunststoffkomponente 16 wird demgegenüber bevorzugt eine solche gewählt, die im aufgeschmolzenen Zustand eine höhere Viskosität und im verfestigten Zustand, im Hinblick auf eine ausreichend hohe Steifigkeit und Festigkeit des Handgriffes 11, eine hohe Biegesteifigkeit und Festigkeit aufweist. Es kann sich bei der Kunststoffkomponente 16 inbesondere um eine faserverstärkte Masse, gegebenenfalls auch aus einem rezyklierten Material handeln. Das bereits erwähnte Produkt Grivory® GV, eine glasfaserverstärkte Mischung aus Polyamid 66 und Polyamid 61/6T ist besonders gut geeignet. Die genannten Produkte können auch für die nachstehend erläuterten Spritzgussteile verwendet werden. Die Kunststoffkomponente 16 könnte als Kernmaterial überdies auch geschäumt sein.

Fig. 2 zeigt anhand eines Türgriffs 20 mit Handgriff 21 als steife Zone und integrierter Griffschale 24, dass sich die Erfindung auch bei komplizierter gestaltenen Teilen mit Vorteil anwenden lässt. Die den Handgriff 21 mit der Griffschale 24 verbindende Biegegelenkzone ist mit 22 bezeichnet.

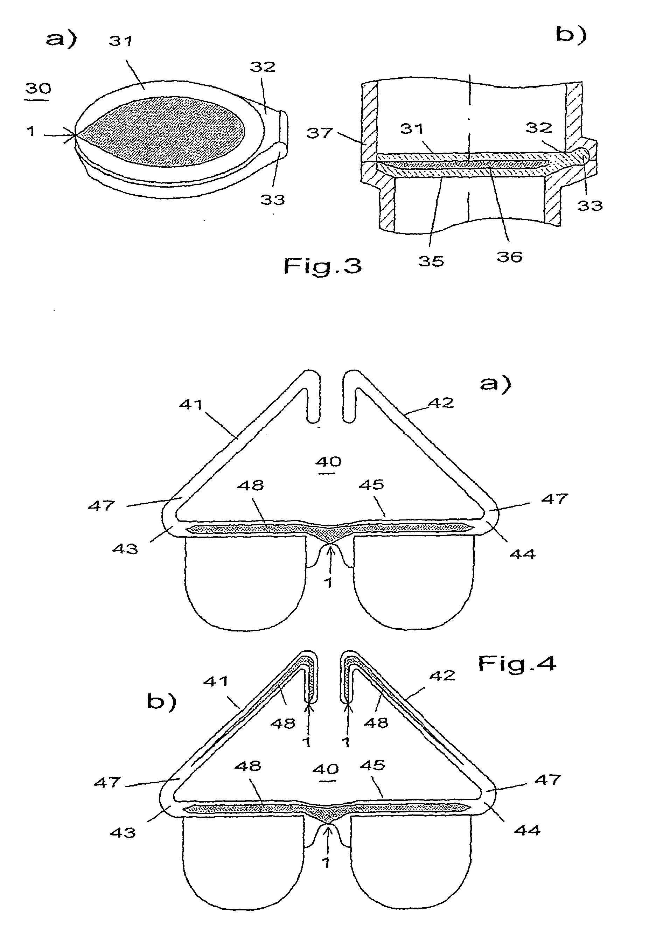

Fig. 3 zeigt unter a) in perspektivischer Darstellung ein weiteres Spritzgussteil nach der Erfindung in Form einer Dichtungsklappe 30 mit einer Art Deckel 31 als steife Zone, einer daran angeformten Biegegelenkzone 32 sowie einem Verankerungsteil 33. Der Deckel 31 ist aus zwei Kunststoffkomponenten 35 und 36 aufgebaut, wobei die im Deckel 31 äussere Kunststoffkomponente 35 auch die Biegegelenkzone 32 sowie das Verankerungsteil 33 bildet. Im Hinblick auf diesen grundsätzlichen Aufbau besteht Übereinstimmug mit dem Türgriff von Fig. 1, wenn man die Klappe als flächigen Hebel auffasst. Unter b) zeigt Fig. 3 die Dichtungsklappe 30 eingebaut in einem Rohrsystem 37, wobei das Verankerungsteil 33 in der Rohrwand verankert ist und der Deckel die Rohröffnung nach Art eines Einwege- bzw. Rückschlagventils abdichtet.

Fig. 4a zeigt mit einem Brillengestell 40 ein völlig anderes Spritzgussteil nach der Erfindung, bei welchem zwei Biegegelenkzonen vorhanden sind. Bei dem Brillengestell 40 sind die beiden Brillenbügel 41 und 42 nämlich mit angespritzt und über erfindungsgemässe Biegegelenkzonen 43 und 44 jeweils mit dem vorderen, die Gläser haltendenden Gestellteil 45 als steife Zone beweglich verbunden, so dass die an sich üblichen mechanischen Scharniere zur Anlenkung der Brillenbügel entfallen. Beim Aufsetzen der Brille legen sich die Bügel mit angenehm leichtem Druck am Kopf an, zum platzsparenden Versorgen in einem Brillenetui andererseits können die Bügel ganz nach innen gelegt werden. Das Brillengestell 40 ist durch Co-Injektion zweier unterschiedlicher Kunststoffkomponenten 47 und 48 von dem durch einen Pfeil gekennzeichneten Anspritzpunkt 1 am Nasensteg aus hergestellt, wobei die hell dargestellte Kunststoffkomponente 47 als erste und die dunkel dargestellte Kunststoffkomponente 48 als zweite in die Form eingespritzt wurde. Die Kunststoffkomponente 47 bildet die Aussenhülle des Gestellteils 45, die beiden Brillenbügel 41 und 42 sowie die beiden Biegegelenkzonen 43 und 44. Die Kunststoffkomponente 48 bildet demgegenüber lediglich einen versteifenden Kern des Gestellteils 45. Die Gläser werden übrigens durch gängige Methoden in das Gestellteil 45 eingesetzt, am besten durch Clips-Technik. Alternativ wäre es auch möglich, Gläser bzw. Linsen aus transparentem Kunststoff direkt an das Gestellteil 45 anzuspritzen. Besonders gut würde sich dafür wiederum das bereits erwähnte Polyamid MACM 12 eignen, das unter dem Handelsnamen Grilamid® TR 90 von der EMS-Chemie AG, CH-7012 Domat-Ems, auch für optische Anwendungen verkauft wird.

Eine weiterentwickelte Variante des einteiligen Brillengestells 40 ist in Fig. 4b) dargestellt. Hier wurden auch die beiden Bügel 41 und 42 von den Enden her verstärkt, durch Co-Injektion von zwei zusätzlichen Anspritzpunkten 1 an den Enden her.

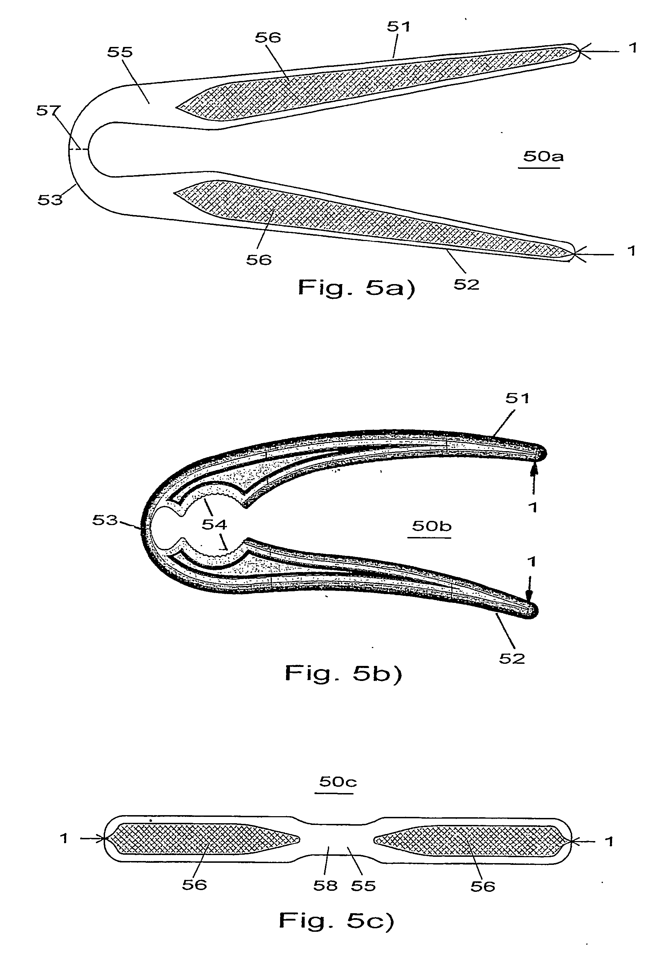

Fig. 5a) zeigt in Form eines zangenartigen Werkzeugs 50a, ein prinzipielles Ausführungsbeispiel für ein Spritzgussteil nach der Erfindung , bei welchem beidseits einer Gelenkzone durch diese beweglich miteinander verbundene steife Zonen vorhanden sind. Das zangenartige Werkzeug 50a ist gestaltet als Handwerkzeug, das als steife Zonen zwei formstabile Betätigungsgriffe 51 und 52 aufweist, die über eine flexible rückfedernde Biegegelenkzone 53 miteinander verbunden sind.

Hergestellt ist das zangenartige Werkzeug 50a durch gleichzeitiges Anspritzen von jeweils einem Anspritzpunkt am freien Ende jedes Betätigungsgriffes 51 und 52 aus, wobei an jedem dieser beiden durch Pfeile gekenzeichneten Anspritzpunkte 1 wie in den vorbeschriebenen Beispielen zwei verschiedene Kunststoffkomponenten 55 und 56 co-injiziert wurden. Das Herstellungverfahren kann entsprechend charakterisiert werden als eine Kombination der beiden Verfahren Bi-Injektion und Co-Injektion. Jeweils zuerst eingespritzt wurde die Kunststoffkomponente 55, welche die Oberfläche des zangenartigen Werkzeugs 50a sowie die Biegegelenkzone 53 bildet. Die jeweils nachfolgend eingespritzte Kunststoffkomponente 56 bildet jeweils einen versteifenden Kern in den beiden Betätigungsgriffen 51 und 52.

Durch das gleichzeitige Anspritzen von den beiden Anspritzpunkten 1 aus ergibt sich in dem zangenartigen Werkzeug 50a zwangläufig dort, wo die über die beiden Anspritzpunkte injizierten Schmelzen in der Formkavität zusammentreffen, eine Bindenaht. Aus Symmetriegründen kommt diese mit 57 bezeichnete Bindenaht bei dem zangenartigen Werkzeug 50a in der Gelenkzone 53 zu liegen. Obwohl Bindennähte, wie bereits ausgeführt, regelmässig Schwachstellen eines Spritzgussteiles bilden, hat sich unter Verwendung des bereits mehrfach erwähnten Produktes Polyamid MACM 12 für die jeweils zuerst eingespritzte Kunststoffkomponente 55 in überraschender Weise herausgestellt, dass hierbei eine nennenswerte Schwächung im Bereich der Bindenaht nicht auftritt und dass diese sogar ohne mechanische Nachteile mitten in die auf Zug und Biegung hoch belastete Biegegelenkzone gelegt werden kann.

Das schematisch dargestellte zangenartige Werkzeug 50a von Fig.5a) steht für die verschiedenartigsten Handwerkzeuge, z.B. Pinzetten, Ess-Stäbchen (die einfacher zu halten sind als übliche separate Stäbchen), Servierzangen für die Küche, Knoblauchpresse, Öffner für verschraubte Dosendeckel, Bearbeitungswerkzeuge zum Schneiden oder Festhalten (diverse Greifzangen) oder auch als Fitnessgerät (.z.B. als Handfeder). Bei pinzettenartigen Handwerkzeugen müssen die Innenseiten der beiden Schenkel natürlich schlanker ausgeführt sein als in Fig. 5a) gezeichnet, damit sich beim Zusammendrücken die beiden Betätigungsgriffe nicht schon in der Nähe der flexiblen Zone, sondern erst an den Enden berühren.

Eine spezielle Ausführungsform einer erfindungsgemässen Zange ist ein Nussknacker 50b. Ein solcher ist mit seinen Aussenkonturen abgebildet in Fig. 5b), wobei auf ein ergonomisches Design geachtet wurde, das zugleich durch seine elegante Ästhetik besticht. Wie bei Nussknackern an sich üblich sind die Betätigungsgriffe 51 und 52 in ihrem sich an die Gelenkzone anschliessenden Bereich mit einer Ausbildung 54 zur Aufnahme und zum Knacken der Nüsse versehen. Es versteht sich, dass wegen der sprichwörtlichen Härte der Nüsse die beiden Betätigungsgriffe über eine hohe Steifigkeit und auch Festigkeit verfügen müssen.

In Fig. 5c) ist schematisch ein gestreckter Doppelhebel 50c dargestellt. Die entsprechende Gelenkzone 58 kann erfindungsgemäss sowohl ein Biegegelenk als auch ein Torsionsgelenk verkörpern. Für solche Teile wären sogar Anwendungen im Medizinbereich denkbar (als Implantate oder Prothesen).

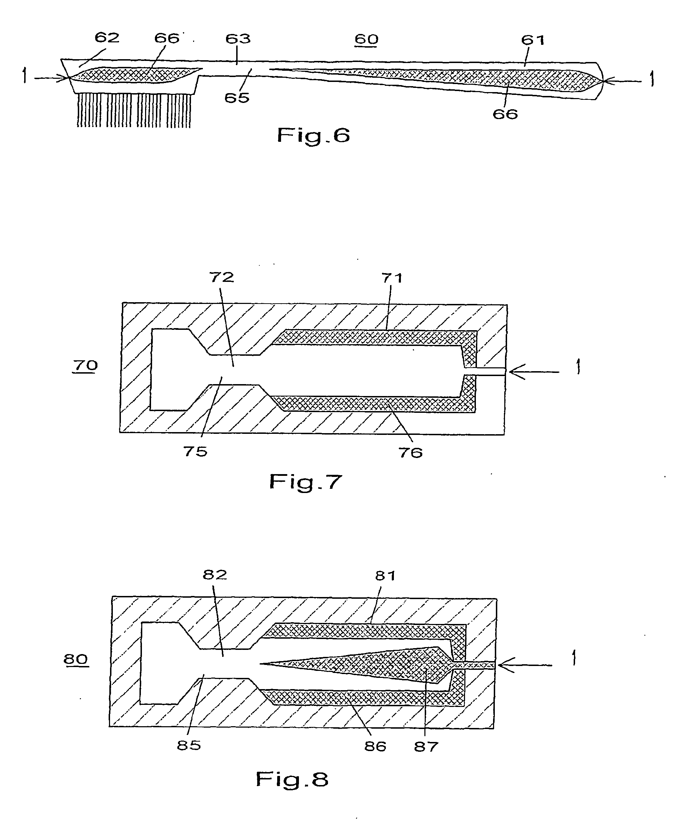

Fig. 6 zeigt in Form einer Zahnbürste 60 ein Beispiel aus dem Bereich der Körperpflege für einen gestreckten Doppelhebel nach der Erfindung, bei welchem beidseits einer Gelenkzone durch diese beweglich miteinander verbundene steife Zonen vorhanden sind. Eine der steifen Zonen bildet der Griff 61 und die andere steife Zone der Kopf 62 der Zahnbürste. Verbunden sind diese über eine flexible Halszone 63. Auch dieses Spritzgussteil ist durch Bi- und Co-Injektion zweier verschiedener Kunststoffkomponenten 65 und 66 hergestellt, wobei die Kunststoffkomponente 65 die Aussenhülle der Zahnbürste 60 und die flexible Halszone und die Kunststoffkomponente 66 jeweils einen versteifenden Kern im Griff 61 und im Kopf 62 bildet.

Fig. 7 zeigt ein Spritzgussteil 70 mit steife Zone und Gelenkzone noch in der Spritzgusskavität, bei welchem die die Gelenkzone 72 bildende Kunststoffkomponente 75 in der steife Zone 71 innenliegend angeordnet ist und eine weitere Kunststoffkomponente 76 eine harte Aussenschicht der steifen Zone 71 bildet. Herstellungstechnisch erreichbar wird dies dadurch, indem man zunächst die Kunststoffkomponente 76 in die Formkavität einspritzt und erst nachfolgend die Kunststoffkomponente 75. Die nachfolgend gespritzte Kunststoffkomponente 75 muss dabei, um in die Gelenkzone 72 vordringen zu können, die zuvor gespritzte Kunststoffkomponente 76 durchbrechen.

Fig. 8 zeigt noch eine Ausführungsform eines Spritzgussteils 80 mit steifer Zone 81 und Gelenkzone 82 ebenfalls noch in der Spritzgussform, bei welchem die steife Zone 81 durch drei Kunststoffkomponenten 85, 86 und 87 gebildet wird, welche in der Reihenfolge 86, 85 und 87 gespritzt wurden. Es ergibt sich eine Struktur gemäss Fig. 7 mit einem zusätzlichen versteifenden Kern in der steifen Zone 81.

Die vorstehenden Beispiele lassen erkennen, dass die vorliegende Erfindung bei einer Vielzahl von unterschiedlichsten Gegenständen anwendbar ist. Sie lassen weiter erkennen, dass es sich bei den steifen Zonen um auf Biegung und/oder Torsion hochbelastbare Teile wie Hebelarme oder dergleichen handeln kann, an welchen bestimmungsgemäss Kräfte angreifen. Aber auch für mittelstark belastete Teile wie Schnapphaken oder Clipse (z.B. an einem Kugelschreiber) ergeben sich Gebrauchsvorteile bei erfindungsgemässer Ausführung. Die Beispiele lassen schliesslich erkennen, dass es sich bei der Gelenkzone um eine bestimmungsgemässe, zumindest im wesentlichen eigenständig und von anderen funktionellen Zonen abgrenzbar ausgebildete, wechselbiegefeste und torsionsfeste Zone des Spritzgussteils handelt, die nicht lediglich einen zufälligen Fortsatz einer anderen funktionellen Zone oder einen integralen Teil einer solche Zone bildet, sondern der eine mechanische Gelenkfeder-Funktion zukommt, die sonst üblicherweise durch ein mehrteiliges mechanisches Gelenk oder Scharnier mit diskreter Rückstellfeder realisiert wird.

Gegenüber den herkömmlichen mechanischen Lösungen hat die vorliegende Erfindung folgende Vorteile: Kein Scharnier mit unzugänglichen Ecken, keine Schmierstoffe, keine Ablagerungen, somit gute Reinigung möglich (auch für hygienische Ansprüche). Zudem verschleissfrei, wartungsfrei und mit gleichbleibender Präzision über die ganze Lebensdauer, die sehr lang sein kann. Für Anwendungen im Freien können Kunststoffe mit UV-Stabilisator verwendet werden (für die Aussenschicht). Das bevorzugte Polyamid MACM 12 (Grilamid® TR 90) ist chemikalienbeständig und witterungsstabil (mit UV-Stabilisator). Es ist spülmaschinenfest und auch für Lebensmittelanwendungen zugelassen.

Vorteilhafte Verwendungen erfingungsgemässer Spritzgussteile sind insbesondere möglich in den Bereichen Küche, Haushalt, Büro, Industrie, Motorfahrzeuge, Fahrrad, Maschinen- und Apparatebau, Sport, Freizeit, Lebensmittelverarbeitung, Körperpflege und Medizin.

Anzumerken bleibt noch, dass es im Rahmen der Erfindung liegt, erfindungsgemässe Kunststoff-Spritzgussteile gegebenenfalls nachzubearbeiten. Unter Nachbearbeitung wird einerseits die Verbindung mit weiteren Kunststoffen verstanden, z.B. durch Umspritzen oder Anspritzen entweder in derselben (aber erweiterten) Kavität, oder in einer anderen Kavität. Zur Nachbearbeitung gehören aber selbstverständlich auch alle Oberflächenveredelungen wie Polieren, Lackieren und Metallisieren. Auch die Kombination mit anderen Werkstoffen ist möglich.

### BEZEICHNUNGSLISTE

- Anspritzpunkt: 1
- Türgriff: 10
- Handgriff: 11
- Biegegelenkzone: 12
- Verankerungsteil: 13
- Haken: 14
- Kunststoffkomponenten: 15, 16
- Türgriff: 20
- Handgriff: 21
- Biegegelenkzone: 22
- Griffschale: 24
- Dichtungsklappe: 30
- Deckel: 31
- Biegegelenkzone: 32
- Verankerungsteil: 33
- Kunststoffkomponenten: 35, 36
- Rohrsystem: 37
- Brillengestell: 40
- Brillenbügel: 41, 42
- Biegegelenkzonen: 43, 44
- Gestellteil: 45
- Kunststoffkomponenten: 47, 48
- Zangenartiges Werkzeug: 50a
- Nussknacker: 50b
- Gestreckter Doppelhebel: 50c
- Betätigungsgriffe: 51, 52
- Biegegelenkzone: 53
- Ausbildung zum Nüsse Knacken: 54
- Kunststoffkomponenten: 55, 56
- Bindenaht: 57
- Biege- und/oder Torsionsgelenkzone: 58
- Zahnbürste: 60
- Griff: 61
- Kopf: 62
- Flexible Halszone: 63
- Kunststoffkomponenten: 65, 66
- Spritzgussteil: 70
- Steife Zone: 71
- Gelenkzone: 72
- Kunststoffkomponenten: 75, 76
- Spritzgussteil: 80
- Steife Zone: 81
- Gelenkzone: 82
- Kunststoffkomponenten: 85, 86, 87

## Patentansprüche

1. Kunststoff-Spritzgussteil mit mindestens einer flexiblen rückfedernden Gelenkzone (43, 44, 53, 58, 63) und steifen Zonen (41, 42, 45, 51, 52, 61, 62) beidseits der Gelenkzone (43, 44, 53, 58, 63), wobei die steifen Zonen (41, 42, 45, 51, 52, 61, 62) durch die mindestens eine Gelenkzone (43, 44, 53, 58, 63) beweglich miteinander verbunden sind, **dadurch gekennzeichnet, dass** es aus verschiedenen, an jeweils einem Anspritzpunkt (1) im Bereich der steifen Zone (41, 42, 45, 51, 52, 61, 62) co-injizierten Kunststoffkomponenten (47, 48, 55, 56, 65, 66, 75, 76) in einer einzigen Kavität hergestellt ist, wobei lediglich eine Komponente (47, 55, 65, 75) jeweils über die steifen Zonen (41, 42, 45, 51, 52, 61, 62) hinausragt und die Gelenkzone (43, 44, 53, 58, 63) bildet; und dass es durch gleichzeitiges Anspritzen von den Anspritzpunkten (1) im Bereich der steifen Zonen (41, 42, 45, 51, 52, 61, 62) aus hergestellt ist.

2. Spritzgussteil nach Anspruch 1, **dadurch gekennzeichnet, dass** die die Gelenkzone (43, 44, 53, 58, 63) bildende Kunststoffkomponente (47, 55, 65, 75) eine Aussenhülle in der steifen Zone (41, 42, 45, 51, 52, 61, 62) bildet und dass die übrigen am gleichen Anspritzpunkt (1) der steifen Zone (41, 42, 45, 51, 52, 61, 62) co-injizierten Kunststoffkomponenten (48, 56, 66, 76) einen versteifenden Kern in der steifen Zone (41, 42, 45, 51, 52, 61, 62) bilden.

3. Spritzgussteil nach Anspruch 2, **dadurch gekennzeichnet, dass** sich der versteifende Kern (48, 56, 66, 76) in der steifen Zone zur Gelenkzone (43, 44, 53, 58, 63) hin auslaufend verjüngt.

4. Spritzgussteil nach Anspruch 1, **dadurch gekennzeichnet, dass** die die Gelenkzone (43, 44, 53, 58, 63) bildende Kunststoffkomponente (47, 55, 65, 75) im Innern der steifen Zone angeordnet ist und dass mindestens eine der übrigen am gleichen Anspritzpunkt der steifen Zone (41, 42, 45, 51, 52, 61, 62) co-injizierten Kunststoffkomponenten eine steifere Aussenhülle in der steifen Zone (41, 42, 45, 51, 52, 61, 62) bildet.

5. Spritzgussteil nach einem der Ansprüche 1 - 4, **dadurch gekennzeichnet, dass** die steife Zone (41, 42, 45, 51, 52, 61, 62) als Hebel ausgebildet ist.

6. Spritzgussteil nach einem der Ansprüche 1 - 5, **dadurch gekennzeichnet, dass** in der Gelenkzone (43, 44, 53, 58, 63) eine Bindenaht (57) vorhanden ist.

7. Spritzgussteil nach einem der Ansprüche 1 - 6, **dadurch gekennzeichnet, dass** die die Gelenkzone (43, 44, 53, 58, 63) bildende Kunststoffkomponente (47, 55, 65, 75) biege- und/oder torsionsweicher ist als mindestens eine der übrigen Kunststoffkomponenten (48, 56, 66, 76) und zwar vorzugsweise um mindestens 20%, weiter vorzugsweise sogar um 50%, und dass der Zug-E-Modul dieser Kunststoffkomponente vorzugsweise absolut kleiner ist als 4000 MPa und weiter vorzugsweise etwa 1600 MPa beträgt.

8. Spritzgussteil nach Anspruch 7, **dadurch gekennzeichnet, dass** mindestens eine der übrigen Kunststoffkomponenten (48, 56, 66, 76) einen Zug-E-Modul grösser als 4000 MPa, vorzugsweise sogar grösser als 8000 MPa aufweist und/oder faserverstärkt und/oder mineralverstärkt ist.

9. Spritzgussteil nach einem der Ansprüche 1 - 8, **dadurch gekennzeichnet, dass** die die Gelenkzone (43, 44, 53, 58, 63) bildende Kunststoffkomponente (47, 55, 65, 75) ein thermoplastisches Elastomer und/oder ausgewählt ist aus der Gruppe Polyamide, Polyetheramide, Polyesteramide, Polycarbonat, Polyurethan und lonomere.

10. Spritzgussteil nach Anspruch 9, **dadurch gekennzeichnet, dass** die die Gelenkzone (43, 44, 53, 58, 63) bildende Kunststoffkomponente (47, 55, 65, 75) Polyamid ist, wobei Polyamid 11, Polyamid 12, Polyamid 6, Polyamid 66, teilaromatische Polyamide, Polyamide mit cycloaliphatischen Monomerbausteinen sowie Legierungen dieser Kunststoffe untereinander bevorzugt sind.

11. Spritzgussteil nach Anspruch 10, **dadurch gekennzeichnet, dass** das Polyamid mit cycloaliphatischen Monomerbausteinen Polyamid PACM 12, Polyamid MACM 12 oder Copolyamide oder Legierungen dieser Kunststoffe sind, wobei Polyamid MACM 12 bevorzugt ist.

12. Spritzgussteil nach einem der Ansprüche 1-11, **dadurch gekennzeichnet, dass** eine weitere, nicht zur Ausbildung der Gelenkzone (43, 44, 53, 58, 63) verwendete Kunststoffkomponente (48, 56, 66, 76) Polybutylenterephthalat oder Polyamid ist und wobei diese Kunststoffkomponente bevorzugt faser-und/ oder mineralverstärkt ist.

13. Spritzgussteil nach Anspruch 12, **dadurch gekennzeichnet, dass** das faserverstärkte Polyamid eine glasfaserverstärkte Mischung aus Polyamid 66 und Polyamid 61 /6T ist.

14. Verwendung eines Spritzgussteils nach einem der Ansprüche 1-13 in den Bereichen Küche, Haushalt, Büro, Industrie, Motorfahrzeuge, Fahrrad, Maschinen- und Apparatebau, Sport, Freizeit, Lebensmittelverarbeitung, Körperpflege und Medizin.

15. Verwendung eines Spritzgussteils nach einem der Ansprüche 1-13 als Türgriff, Fahrrad-Bremshebel, Schnapphaken; Clips, Dichtungsklappe, Brillengestell, Zahnbürste, Zange, Pinzette, Bearbeitungswerkzeug, Ess-Stäbchen, Servierzange, Knoblauchpresse, Dosendeckelöffner, Greifzange, Nussknacker, Fitnessgerät, Implantat oder Prothese.

## Claims

1. Plastic injection-moulded part comprising at least one flexible, resilient articulated zone (43, 44, 53, 58, 63) and rigid zones (41, 42, 45, 51, 52, 61, 62) on both sides of the articulated zone (43, 44, 53, 58, 63), the rigid zones (41, 42, 45, 51, 52, 61, 62) being movably connected to one another by the at least one articulated zone (43, 44, 53, 58, 63), **characterized in that** it is produced in a single cavity from various plastic components (47, 48, 55, 56, 65, 66, 75, 76) co-injected respectively at an injection point (1) in the region of the rigid zone (41, 42, 45, 51, 52, 61, 62), only one component (47, 55, 65, 75) respectively projecting beyond the rigid zones (41, 42, 45, 51, 52, 61, 62) and forming the articulated zone (43, 44, 53, 58, 63); and **in that** it is produced by simultaneous injection from the injection points (1) in the region of the rigid zones (41, 42, 45, 51, 52, 61, 62).

2. Injection-moulded part according to Claim 1, **characterized in that** the plastic component (47, 55, 65, 75) forming the articulated zone (43, 44, 53, 58, 63) forms an outer sleeve in the rigid zone (41, 42, 45, 51, 52, 61, 62) and **in that** the other plastic components (48, 56, 66, 76) that are co-injected at the same injection point (1) of the rigid zone (41, 42, 45, 51, 52, 61, 62) form a stiffening core in the rigid zone (41, 42, 45, 51, 52, 61, 62).

3. Injection-moulded part according to Claim 2, **characterized in that** the stiffening core (48, 56, 66, 76) in the rigid zone tapers towards the articulated zone (43, 44, 53, 58, 63).

4. Injection-moulded part according to Claim 1, **characterized in that** the plastic component (47, 55, 65, 75) forming the articulated zone (43, 44, 53, 58, 63) is arranged in the interior of the rigid zone and **in that** at least one of the other plastic components that are co-injected at the same injection point of the rigid zone (41, 42, 45, 51, 52, 61, 62) forms a more rigid outer sleeve in the rigid zone (41, 42, 45, 51, 52, 61, 62).

5. Injection-moulded part according to one of Claims 1 - 4, **characterized in that** the rigid zone (41, 42, 45, 51, 52, 61, 62) is formed as a lever.

6. Injection-moulded part according to one of Claims 1 - 5, **characterized in that** in the articulated zone (43, 44, 53, 58, 63) there is a weld line (57).

7. Injection-moulded part according to one of Claims 1 - 6, **characterized in that** the plastic component (47, 55, 65, 75) forming the articulated zone (43, 44, 53, 58, 63) is flexurally and/or torsionally weaker than at least one of the other plastic components (48, 56, 66, 76), to be specific preferably by at least 20%, more preferably even by 50%, and **in that** the tensile modulus of elasticity of this plastic component is preferably of an absolute amount less than 4000 MPa and more preferably approximately 1600 MPa.

8. Injection-moulded part according to Claim 7, **characterized in that** at least one of the other plastic components (48, 56, 66, 76) has a tensile modulus of elasticity greater than 4000 MPa, preferably even greater than 8000 MPa, and/or is fibre-reinforced and/or mineral-reinforced.

9. Injection-moulded part according to one of Claims 1 - 8, **characterized in that** the plastic component (47, 55, 65, 75) forming the articulated zone (43, 44, 53, 58, 63) is a thermoplastic elastomer and/or is selected from the group comprising polyamides, polyether amides, polyester amides, polycarbonate, polyurethane and ionomers.

10. Injection-moulded part according to Claim 9, **characterized in that** the plastic component (47, 55, 65, 75) forming the articulated zone (43, 44, 53, 58, 63) is polyamide, with preference for polyamide 11, polyamide 12, polyamide 6, polyamide 66, partly aromatic polyamides, polyamides with cycloaliphatic monomer units and alloys of these plastics with one another.

11. Injection-moulded part according to Claim 10, **characterized in that** the polyamide with cycloaliphatic monomer units is polyamide PACM 12, polyamide MACM 12 or co-polyamides or alloys of these plastics, with preference for polyamide MACM 12.

12. Injection-moulded part according to one of Claims 1-11, **characterized in that** a further plastic component (48, 56, 66, 76), not used for forming the articulated zone (43, 44, 53, 58, 63), is polybutylene terephthalate or polyamide, and this plastic component preferably being fibre-reinforced and/or mineral-reinforced.

13. Injection-moulded part according to Claim 12, **characterized in that** the fibre-reinforced polyamide is a glass-fibre-reinforced mixture of polyamide 66 and polyamide 61/6T.

14. Use of an injection-moulded part according to one of Claims 1-13 in the areas of kitchen, household, office, industry, motor vehicles, bicycle, machine and apparatus construction, sport, leisure, food processing, body care and medicine.

15. Use of an injection-moulded part according to one of Claims 1-13 as a door handle, bicycle brake lever, snap hook; clip, seal flap, spectacle frame, toothbrush, tongs, tweezers, machining tool, chopstick, serving tongs, garlic press, can opener, gripping tongs, nutcracker, fitness device, implant or prosthesis.

## Revendications

1. Pièce en matière synthétique moulée par injection présentant au moins une zone d'articulation flexible de rappel élastique (43, 44, 53, 58, 63) et des zones rigides (41, 42, 45, 51, 52, 61, 62) situées des deux côtés de la zone d'articulation (43, 44, 53, 58, 63), les zones rigides (41, 42, 45, 51, 52, 61, 62) étant reliées les unes aux autres de manière mobile par la ou les zones d'articulation (43, 44, 53, 58, 63),
**caractérisée en ce que**
la pièce est réalisée à partir de différents composants (47, 48, 55, 56, 65, 66, 75, 76) de matière synthétique co-injectés dans une cavité unique à un point d'injection (1) respectif situé au niveau de la zone rigide (41, 42, 45, 51, 52, 61, 62), seulement un composant (47, 55, 65, 75) débordant à chaque fois au-delà des zones rigides (41, 42, 45, 51, 52, 61, 62) et formant la zone d'articulation (43, 44, 53, 58, 63) et
**en ce que** la pièce est réalisée par injection simultanée par les points d'injection (1) situés au niveau des zones rigides (41, 42, 45, 51, 52, 61, 62).

2. Pièce moulée par injection selon la revendication 1, **caractérisée en ce que** le composant (47, 55, 65, 75) de matière synthétique formant la zone d'articulation (43, 44, 53, 58, 63) forme une enveloppe extérieure dans les zones rigides (41, 42, 45, 51, 52, 61, 62) et **en ce que** les autres composants (48, 56, 66, 76) de matière synthétique co-injectés au même point d'injection (1) des zones rigides (41, 42, 45, 51, 52, 61, 62) forment une âme de rigidification dans la zone rigide (41, 42, 45, 51, 52, 61, 62).

3. Pièce moulée par injection selon la revendication 2, **caractérisée en ce que** dans la zone rigide, l'âme de rigidification (48, 56, 66, 76) se rétrécit en direction de la zone d'articulation (43, 44, 53, 58, 63).

4. Pièce moulée par injection selon la revendication 1, **caractérisée en ce que** le composant (47, 55, 65, 75) de matière synthétique formant la zone d'articulation (43, 44, 53, 58, 63) est disposé à l'intérieur de la zone rigide et **en ce qu'**au moins un des autres composants de matière synthétique co-injectés au même point d'injection de la zone rigide (41, 42, 45, 51, 52, 61, 62) forme une enveloppe extérieure plus rigide dans la zone rigide (41, 42, 45, 51, 52, 61, 62).

5. Pièce moulée par injection selon l'une des revendications 1 à 4, **caractérisée en ce que** la zone rigide (41, 42, 45, 51, 52, 61, 62) est configurée en levier.

6. Pièce moulée par injection selon l'une des revendications 1 à 5, **caractérisée en ce qu'**un cordon de liaison (57) est prévu dans la zone d'articulation (43, 44, 53, 58,63).

7. Pièce moulée par injection selon l'une des revendications 1 à 6, **caractérisée en ce que** le composant (47, 55, 65, 75) de matière synthétique qui forme la zone d'articulation (43, 44, 53, 58, 63) est de préférence d'au moins 20 % et de manière plus préférable même de 50 % plus déformable en flexion et/ou en torsion qu'au moins un des autres composants (48, 56, 66, 76) de matière synthétique et **en ce que** le module élastique en traction de ce composant de matière synthétique est de préférence absolument inférieur à 4 000 MPa et de manière encore plus préférable vaut environ 1 600 MPa.

8. Pièce moulée par injection selon la revendication 7, **caractérisée en ce qu'**au moins l'un des autres composants (48, 56, 66, 76) de matière synthétique présente un module élastique en traction supérieur à 4 000 MPa et de préférence même supérieur à 8 000 MPa et/ou est renforcé de fibres et/ou de minéraux.

9. Pièce moulée par injection selon l'une des revendications 1 à 8, **caractérisée en ce que** le composant (47, 55, 65, 75) de matière synthétique qui forme la zone d'articulation (43, 44, 53, 58, 63) est un élastomère thermoplastique et/ou est sélectionné dans l'ensemble constitué des polyamides, des polyétheramides, des polyesteramides, des polycarbonates, des polyuréthanes et des ionomères.

10. Pièce moulée par injection selon la revendication 9, **caractérisée en ce que** le composant (47, 55, 65, 75) de matière synthétique qui forme la zone d'articulation (43, 44, 53, 58, 63) est un polyamide, le polyamide 11, le polyamide 12, le polyamide 6, le polyamide 66, les polyamides partiellement aromatiques, les polyamides à composants monomères cycloaliphatiques et les alliages de ces matières synthétiques entre elles étant préférés.

11. Pièce moulée par injection selon la revendication 10, **caractérisée en ce que** le polyamide à composants monomères cycloaliphatiques est le polyamide PACM 12, le polyamide MACM 12 ou des copolyamides ou alliages de ces matières synthétiques, le polyamide MACM 12 étant préféré.

12. Pièce moulée par injection selon l'une des revendications 1 à 11, **caractérisée en ce qu'**un autre composant (48, 56, 66, 76) de matière synthétique non utilisé pour former la zone d'articulation (43, 44, 53, 58, 63) est un poly(téréphtalate de butylène) ou un polyamide, ce composant de matière synthétique étant de préférence renforcé de fibres et/ou de minéraux.

13. Pièce moulée par injection selon la revendication 12, **caractérisée en ce que** le polyamide renforcé de fibres est un mélange renforcé de fibres de polyamide 66 et de polyamide 61/6T.

14. Utilisation d'une pièce moulée par injection selon l'une des revendications 1 à 13 dans le secteur de la cuisine, de l'habitat, du bureau, de l'industrie, des véhicules automobiles, des cycles, de la construction de machines et d'appareils, du sport, des loisirs, du traitement des produits alimentaires, des soins du corps et de la médecine.

15. Utilisation d'une pièce moulée par injection selon l'une des revendications 1 à 13 comme poignée de porte, levier de frein de cycle, crochet encliquetable, pince, clapet d'étanchéité, monture de lunettes, brosse à dents, languette, pincette, outil de traitement, barrette Ess, pince à servir, pressoir à ail, ouvre-boîte, pince de saisie, casse-noix, appareil de fitness, implant ou prothèse.
